# EUROPEAN PATENT SPECIFICATION

(11) **EP 0 757 830 B1**
(45) Date of publication and mention of the grant of the patent: **23.12.1998**
(21) Application number: 95913288.7
(22) Date of filing: 31.03.1995
(51) Int. Cl.: G09F 3/00, G06K 19/06

(54) **CODED ITEMS FOR LABELLING OBJECTS**
CODIERTE ELEMENTE ZUR MARKIERUNG VON OBJECTEN
ARTICLES CODES DESTINES A L'ETIQUETAGE D'OBJETS

(30) Priority: 25.04.1994 GB 9408169
(43) Date of publication of application: 12.02.1997
(60) Divisional application: 98201635.4
(73) Proprietor: UNIVERSITY OF HERTFORDSHIRE, Hatfield, Herts. AL10 9AB (GB)
(72) Inventor: KAYE, Paul Henry, 1 Coopers Close, Hertfordshire SG4 8QU (GB); TRACEY, Mark Christopher, 5 The Old School, Hertfordshire SG13 7QX (GB); GORDON, John Ashley, Lynfield House, Hertfordshire SG3 6TL (GB)
(74) Representative: Maury, Richard Philip
(86) International application number: GB9500756
(87) International publication number: WO9529473

(56) References cited:
- EP-A- 0 629 989
- GB-A- 1 568 699
- US-A- 4 053 433
- US-A- 4 243 734
- US-A- 4 329 393
- US-A- 4 390 452

## Description

This invention relates to coded items for labelling objects such as vehicles, credit cards and jewellery, and is particularly useful for the invisible labelling of such objects with security marks to enable the objects to be identified or their origin to be identified.

Many methods are employed to protect merchantable items from theft or forgery. Car chassis and engines have serial numbers, credit cards have holographic icons, etc. Ultimately, all these devices can be defeated by either removal or replication. Ideally, an item would be marked with a security device which was impossible to remove or replicate, or where the effort required to remove or replicate it exceeded the value of the item itself.

There have been several methods devised for the production of particles which carry some form of information in such a way as to allow the particles to potentially be used as a method of marking or identifying an object. These constitute the prior art to the invention. Dillon, for example (US-A-4 243 734) describes microdots carrying indicia identifying the owner of an article. The microdots are small pieces of foil which carry the printed indicia and which are mechanically cut from a larger sheet of foil. Because of the nature of the cutting process, the microdots are restricted to one of several polygonal shapes, the preference being square of side typically from 0.003 inches (76 micrometres) to 0.125 inches (3100 micrometres). LaPerre (US-A-4 329 393) describes particles carrying information by way of visually distinguishable coloured layers. The particles are produced by the random comminution of brittle laminates, and have therefore irregular and uncontrolled shape, with typical sizes along the broadest dimension of between 15 and 1000 micrometres across the coloured layers. Stevens (US-A-4 390 452) describes similar particles which carry information by way of one or a number of identifying features such as coloured layers, fluorescent or phosphorescent material layers, or the presence of trace elements. Again, the particles are produced by the shattering of brittle laminates into irregular broken pieces, with typical sizes along the broadest dimension of between 15 and 1000 micrometres. In all of these methods, the shape of individual particles is either uncontrolled or is restricted to one of several simple polygonal geometries. The information carried on these microparticles is either alpha-numeric or colour codes.

According to a first aspect of the invention there is provided a microparticle which is invisible to the naked eye and which is marked with digitally-coded machine readable information, characterised in that the microparticle is in the form of a wafer whose thickness is from 0.1µm to 5µm and whose width and length are both in the range of 0.5µm to 50µm.

The invention also provides a tagging compound comprising a powder, fluid or gas mixed with one or more set or sets of microparticles according to the first aspect of the invention, such that the presence of the microparticles is undetectable to the naked eye.

The invention also provides a method of marking an object invisibly with a machine-readable code, comprising applying to the object a set of microparticles of the above type.

By applying such microparticles to an item, the item can be marked extensively or even covered without detracting from its aesthetic or practical purpose.

Preferably, the microparticle is of silicon or silicon dioxide. Such particles can be made by micromachining.

Silicon micromachining is a process developed from the electronics industry. The processes and techniques used in silicon micromachining are based largely upon the highly refined fabrication technology used in semiconductor manufacture - with the objective in micromachining being the creation of microscopic physical or mechanical structures on silicon wafer substrates as opposed to electronic circuitry.

It has been shown in The Production of Precision Silicon Micromachined Non-spherical Particles for Aerosol Studies - Kaye, P.H., Micheli, F., Tracey, M., Hirst, E., and Gundlach, A.M. Journal of Aerosol Science. Vol. 23, Supplement 1, pp 201-204, 1992, that extremely uniform microscopic particles of silicon or silicon dioxide (glass) or a metal such as aluminium, silver, or gold, can be made using the process of silicon micromachining. These particles may be of dimensions from about 0.5µm to 50µm or more across, and from about 0.1 to 5µm thick. (A printed period mark by comparison is typically 500 µm across). The shapes of the particles are designed using a computer-aided-design (CAD) programme and may be of virtually any desired form within the limitations mentioned above. A single silicon wafer of normally 7.5cm (3 inch) or 20cm (8 inch) diameter is used as the substrate on to which the desired particle shapes are projected using an optical mask or directly drawn using so-called e-beam writing. The particles are subsequently formed on the wafer using the deposition and etching processes of silicon micromachining. Typically 200 million particles can be formed on a 7.5cm (3 inch) wafer, each of the particles accurately defined in size and shape. Normally all the particles on one wafer are designed to be of identical size and shape so that when the particles are freed from the wafer substrate (using a further etching process) one is left with a suspension containing a single particle type.

In the preferred example, apart from the shape of each particle being defined, each particle is marked with pits, holes, notches, or other marks so that it is characterised by a unique mark. The marks may form a binary code or some other encrypted coding which only the designer of the particle may have access to. Each particle could then carry a code of typically several hundred binary 'bits' of information.

In order unambiguously to optically image a unique binary number etched in the form of pits, holes, etc. forming a pattern on the microparticle, it is necessary for each constituent mark which represents a binary bit of the number to satisfy Abbe's Condition for the microscopic imaging system in question. With white light illumination and a microscope objective of Numerical Aperture 0.5 the bit spacing should typically exceed approximately 1.2 micrometres. Such an objective, in reflector form, can display a working distance of approximately 16mm and a usable depth of field of approximately 5 micrometres. Such a microscope would be suitable for the analysis of objects such as credit cards or identity cards. Microscopic analysis of larger objects would either require a sample to be removed for analysis (for instance a paint sample from an automobile) or would require the design of a microscope mounting specific to that application (for instance a magnetic mounting or precisely defined objective to base distance such that when held on a plane it is in focus).

An alternative to microscopic analysis would be offered by the employment of a scanning system (analogous to a very high resolution 'bar code reader') employing a laser beam and appropriate optics to produce a narrow, collimated beam in conjunction with electronics to control the beam and interpret the interaction between the beam and the object under scrutiny. Such a system could offer a focused working distance range sufficient to allow hand-held scrutinisation instruments to be employed.

Additionally the particles should be patterned in such a manner as to ensure that ambiguous pattern interpretation cannot occur in the case of 90, 180 or 270 degree rotation from the intended viewing orientation; ambiguous interpretation due to imaging the microparticle's incorrect face should also be precluded. The addition of unique corner patterns could be employed to achieve this. A particle meeting this design constraint, when imaged by a microscope, will form an image on the imaging element of a video camera. This image, in electronic form, can be digitised and processed by a computer using image processing software. Numerous conventional algorithms can be employed by this software to uniquely identify the morphology of the imaged microparticle. Their operation would typically involve:
(i) Delineating the object image from its background. This operation could be performed by a general purpose commercial image processing package such as Optimas or Visilog.
(ii) Interpreting the morphology of the object in order to ascertain the pattern of marks and hence the unique binary number. This operation would probably employ custom-written software to interpret the data produced by (i).

A suspension of particles, all having identical code markings, may then be used to uniquely identify an object and thus act as a security tag. Examination of the particles on the object can be achieved for example with an optical reader similar to (though of higher resolution) than a bar-code reader found in supermarkets, and the code contained on the particles then identifies the rightful ownership of the object.

For example, an item of jewellery such as a gold necklace could be coated in part or whole with a transparent lacquer containing a suspension of particles. The lacquer would dry to become invisible, and the particles contained, though invisible to the human eye, could nevertheless be viewed using a suitable magnifying device so as to reveal the hidden identity code. To avoid the possibility of the lacquer being removed by a solvent (thus removing the particles as well), the particles could be stamped into the jewellery at the time of hallmarking, thus becoming essentially part of the item itself, resilient to removal without totally removing the hallmarks (which would normally significantly reduce the value of the item).

Another example could be the unique marking of credit cards and similar 'plastic' devices for electronic financial transactions, or paper currency or security bonds etc. The cards could be marked at some point(s) with an 'ink' containing the particles. Again the particles would each carry a copy of a unique coding tag which could be traceable to the rightful owner of the card. An imaging system, again like a bar-code reader, could be used to 'read' the data on the particles and ascertain the authority of ownership. Removal of the ink and particles would render the card invalid.

Another example would be to apply the particles (all having the same code) with the top layer of paint or varnish onto a motor car. The particles, invisible to the naked eye, would not detract from the appearance of the vehicle. By coating the whole vehicle, inner facing panels included, with this coded paint, a potential thief would have to remove all the paint from the vehicle to remove all the particles in order to prevent its true identification becoming known. Such a process, and subsequent repainting, would involve so much labour as to render the original theft non-profitable. Typically, one particle per square millimetre of surface area would be required to coat the vehicle. This may amount to 20 million particles per vehicle, i.e. corresponding to approximately one-tenth of a 7.5cm (3 inch) wafer's worth.

A further example would be to incorporate the particles in so-called security smoke devices. These devices are found for example in hole-in-the-wall cash machines and armoured vehicles. They release automatically a smoke dye to cover the currency and possibly the thief when disturbed. The particles would also cover the currency and thief and, because they would carry a unique code, would provide a means of linking a specific item of currency or person to the specific incident.

Any item could in theory be marked in this way to provide identifying security marks. The particles have many advantages including that (i) they can be made identically and in huge numbers by the process of micromachining - they can be made if desired in silicon dioxide, i.e. glass (coloured if required) and as such be impervious to most acids etc., (ii) their production, e.g. through the process of micromachining, is non-trivial and requires highly specialist equipment and skills, thus unauthorised replication of the particles would be very difficult to achieve, and (iii) they are essentially invisible to the naked eye.

If more information is required to identify an article, a mixture of two or more sets of differently-coded particles could be applied, at the cost of longer read-time by the optical scanning device.

Although in many examples it is appropriate to coat outer surfaces of the objects with the identifying particles, it is envisaged that liquids and other fluid materials such as drinks, fuels and perfumes could be marked by mixing with the microparticles. Even solid objects could be impregnated internally with the microparticles, or the microparticles could be mixed with fluid materials during the manufacture of the solid objects, e.g. in a mould.

## Claims

1. A microparticle which is invisible to the naked eye and which is marked with digitally-coded machine readable information, characterised in that the microparticle is in the form of a wafer whose thickness is from 0.1µm to 5µm and whose width and length are both in the range of 0.5µm to 50µm.

2. A microparticle according to Claim 1 wherein the machine readable information is in the form of a binary code.

3. A microparticle according to Claim 1 or Claim 2 wherein the microparticle incorporates an orientation marker.

4. A microparticle according to any preceding claim comprising silicon, silicon dioxide, or a metal.

5. A microparticle according to Claim 4, comprising aluminium, silver or gold.

6. A microparticle according to any preceding Claim, whose machine readable code is readable by an optical device.

7. A microparticle according to any preceding Claim, in which the code is representative of data comprising a multiplicity of bits.

8. A set of a multitude of substantially identically-encoded microparticles each according to any preceding Claim.

9. A set of microparticles according to Claim 8, all being of substantially the same size and shape.

10. A tagging compound comprising one or more set or sets of microparticles according to Claims 7, 8 or 9 mixed with a powder, fluid or gas, such that the presence of the microparticles in the mixture is undetectable to the naked eye.

11. A tagging compound according to Claim 10, comprising a paint or ink or fluid dye.

12. A tagging compound according to Claim 10, comprising a smoke dye.

13. A container for tagging an object or objects with a readable code, containing a tagging compound according to any of Claims 10 to 12 inclusive, and having means for dispensing the tagging compound from the container.

14. A method of marking an object invisibly with a machine-readable code, characterised by applying to the object a set of microparticles according to Claim 8 or Claim 9.

15. A method of marking a vehicle invisibly with a machine-readable code, characterised by applying to the vehicle a set of a multitude of substantially identically encoded microparticles, in which the set of microparticles is part of a tagging compound according to Claim 11 and is applied as a coating to the vehicle surface.

16. A method of marking an inherently valuable item such as jewellery invisibly with a machine-readable code, characterised by applying to the inherently valuable item such as jewellery a set of a multitude of substantially identically-encoded microparticles each invisible to the naked eye and marked with digitally-coded machine readable information, in which the set of microparticles is part of a tagging compound according to Claim 11 and is applied as a transparent hardenable lacquer to the surface of the item.

17. A method of marking an inherently valuable item such as a plastics card, such as a credit or charge card invisibly with machine-readable information, characterised by applying to the inherently valuable item such as a plastics card, such as a credit or charge card, a set of a multitude of substantially identically-encoded microparticles each invisible to the naked eye and marked with digitally-coded machine readable information, in which the set of microparticles is part of a tagging compound according to Claim 11 and is applied selectively as an ink or lacquer.

18. A security device for cash machines or other public access dispensing devices, fitted with a container according to Claim 13 in the form of an automatically actuable smoke canister filled with the tagging compound which comprises a smoke dye.

## Patentansprüche

1. Für das bloße Auge unsichtbares Mikroteilchen, das mit einer digital codierten, maschinenlesbaren Information markiert ist, dadurch gekennzeichnet, daß das Mikroteilchen die Form einer Scheibe aufweist, deren Dicke in einem Bereich von 0,1 µm bis 5 µm und deren Breite und Länge beide in dem Bereich von 0,5 µm bis 50 µm liegen.

2. Mikroteilchen nach Anspruch 1, bei dem die maschinenlesbare Information die Form eines binären Codes aufweist.

3. Mikroteilchen nach Anspruch 1 oder 2, wobei das Mikroteilchen eine Orientierungsmarkierung umfaßt.

4. Mikroteilchen nach einem der vorhergehenden Ansprüche, das Silizium, Siliziumoxid oder ein Metall enthält.

5. Mikroteilchen nach Anspruch 4, das Aluminium, Silber oder Gold enthält.

6. Mikroteilchen nach einem der vorhergehenden Ansprüche, dessen maschinenlesbarer Code durch eine optische Vorrichtung lesbar ist.

7. Mikroteilchen nach einem der vcrhergehenden Ansprüche, bei dem der Code für Daten repräsentativ ist, die eine Vielzahl von Bits umfassen.

8. Satz von einer Mehrzahl von im wesentlichen identisch codierten Mikroteilchen, jedes gemäß einem der vorhergehenden Ansprüche.

9. Satz von Mikroteilchen nach Anspruch 8, die alle im wesentlichen dieselbe Größe und Form besitzen.

10. Markierungszusammensetzung, mit einem Satz oder mit mehreren Sätzen von Mikropartikeln gemäß Anspruch 7, 8 oder 9, gemischt mit einem Pulver, Fluid oder Gas, so daß die Anwesenheit der Mikroteilchen in der Mischung für das bloße Augen nicht detektierbar ist.

11. Markierungszusammensetzung nach Anspruch 10, die eine Farbe oder eine Tinte oder einen fluidförmigen Farbstoff enthält.

12. Markierungszusammensetzung nach Anspruch 10, mit einem rauchförmigen Farbstoff.

13. Behälter zum Markieren eines Objektes oder von Objekten mit einem lesbaren Code mit einer Markierungszusammensetzung nach einem der Ansprüche 10 bis 12 einschließlich und mit einer Einrichtung zur Abgabe der Markierungszusammensetzung aus dem Behälter.

14. Verfahren zum unsichtbaren Markieren eines Objekts mit einem maschinenlesbaren Code, gekennzeichnet durch Anbringen eines Satzes von Mikroteilchen gemäß den Anspruch 8 oder 9 an das Objekt.

15. Verfahren zum unsichtbaren Markieren eines Fahrzeuges mit einem maschinenlesbaren Code, gekennzeichnet durch Anlegen eines Satzes einer Mehrzahl von im wesentlichen identisch codierten Mikroteilchen an das Fahrzeug, wobei der Satz der Mikroteilchen Teil einer Markierungszusammensetzung gemäß Anspruch 11 ist und als Beschichtung auf die Fahrzeugoberfläche aufgebracht wird.

16. Verfahren zum unsichtbaren Markieren eines von Natur aus wertvollen Gegenstandes, wie beispielsweise eines Schmuckstückes, mit einem maschinenlesbaren Code, gekennzeichnet durch Aufbringen eines Satzes einer Mehrzahl von im wesentlichen identisch codierten Mikroteilchen, von denen jedes für das bloße Auge unsichtbar ist und mit einer digital codierten maschinenlesbaren Information markiert ist, auf den von Natur aus wertvollen Gegenstand, wie beispielsweise ein Schmuckstück, wobei der Satz der Mikroteilchen Teil einer Markierungszusammensetzung gemäß Anspruch 11 ist und in der Form einer transparenten, härtbaren Lackschicht auf die Oberfläche des Gegenstandes aufgebracht wird.

17. Verfahren zur unsichtbaren Markierung eines von Natur aus wertvollen Gegenstandes, wie beispielsweise einer Plastikkarte, wie beispielsweise einer Kreditkarte oder einer Gebührenkarte, mit einer maschinenlesbaren Information, gekennzeichnet durch Anbringen eines Satzes einer Mehrzahl von im wesentlichen identisch codierten Mikroteilchen, von denen jedes für das bloße Auge unsichtbar ist und mit einer digital codierten, maschinenlesbaren Information markiert ist, an dem von Natur aus wertvollen Gegenstand, wie beispielsweise einer Plastikkarte, wie beispielsweise einer Kreditkarte oder einer Gebührenkarte, wobei der Satz der Mikroteilchen Teil einer Markierungszusammensetzung gemäß Anspruch 11 ist und selektiv in der Form einer Tinte oder eines Lackes aufgebracht wird.

18. Sicherheitseinrichtung für Münzmaschinen oder andere öffentlich zugängliche Verteilereinrichtungen, die mit einem Behälter gemäß Anspruch 13 ausgerüstet sind, in der Form eines automatisch betätigbaren Rauchkanisters, der mit der Markierungszusammensetzung gefüllt ist, die einen rauchförmigen Farbstoff enthält.

## Revendications

1. Microparticule invisible à l'oeil nu et marquée avec une information codée numériquement lisible par une machine, caractérisée en ce que la microparticule est sous la forme d'une plaquette dont l'épaisseur est de 0,1µm à 5µm et dont la largeur et la longueur sont toutes les deux dans la plage de 0,5µm à 50µm.

2. Microparticule selon la revendication 1, dans laquelle l'information lisible par une machine est sous la forme d'un code binaire.

3. Microparticule selon la revendication 1 ou la revendication 2, dans laquelle la microparticule incorpore un marqueur d'orientation.

4. Microparticule selon l'une quelconque des revendications précédentes, comprenant du silicium, du dioxyde de silicium, ou un métal.

5. Microparticule selon la revendication 4, comprenant de l'aluminium, de l'argent et de l'or.

6. Microparticule selon l'une quelconque des revendications précédentes, dont le code lisible par une machine est lisible par un appareil optique.

7. Microparticule selon l'une quelconque des revendications précédentes, dans laquelle le code est représentatif de données comprenant une variété d'éléments binaires.

8. Ensemble d'une multitude de microparticules codées de façon sensiblement identique chacune selon l'une quelconque des revendications précédentes.

9. Ensemble de microparticules selon la revendication 8, toutes étant sensiblement de la même taille et de la même forme.

10. Composé d'étiquetage comprenant un ou plusieurs ensembles de microparticules selon les revendications 7, 8 ou 9, mélangés avec une poudre, un fluide ou un gaz, de sorte que la présence des microparticules dans le mélange est indétectable à l'oeil nu.

11. Composé d'étiquetage selon la revendication 10, comprenant une peinture ou une encre ou un fluide de teinture.

12. Composé d'étiquetage selon la revendication 10, comprenant une teinture de fumée.

13. Récipient pour étiqueter un objet ou des objets avec un code lisible, contenant un composé d'étiquetage selon l'une quelconque des revendications 10 à 12 incluses, et ayant des moyens pour distribuer le composé d'étiquetage du récipient.

14. Méthode de marquage d'un objet de manière invisible avec un code lisible par une machine, caractérisée par l'application à l'objet d'un ensemble de microparticules selon la revendication 8 ou la revendication 9.

15. Méthode de marquage d'un véhicule de manière invisible avec un code lisible par une machine, caractérisée par l'application au véhicule d'un ensemble d'une multitude de microparticules codées de manière sensiblement identique, dans laquelle l'ensemble de microparticules fait partie d'un composé d'étiquetage selon la revendication 11 et est appliqué comme revêtement de la surface du véhicule.

16. Méthode de marquage d'un article de valeur, tel qu'un bijou, de manière invisible avec un code lisible par une machine, caractérisée par l'application à l'article de valeur, tel qu'un bijou, d'un ensemble d'une multitude de microparticules codées de manière sensiblement identique, chacune invisible à l'oeil nu et marquée avec une information codée numériquement lisible par une machine, dans laquelle l'ensemble de microparticules fait partie d'un composé d'étiquetage selon la revendication 11 et est appliqué comme un vernis durcissable transparent sur la surface de l'article.

17. Méthode de marquage d'un article de valeur, tel qu'une carte en plastique, une carte privative ou de crédit, de manière invisible avec une information lisible par une machine, caractérisée par l'application sur l'article de valeur tel qu'une carte en plastique, une carte privative ou de crédit, d'un ensemble d'une multitude de microparticules codées de manière sensiblement identique, chacune invisible à l'oeil nu et marquée avec une information codée numériquement lisible par une machine, dans laquelle l'ensemble de microparticules fait partie d'un composé d'étiquetage selon la revendication 11 et est appliqué sélectivement comme une encre ou un vernis.

18. Dispositif de sécurité pour des distributeurs de billets ou autres dispositifs de distribution accessibles au public, pourvu d'un récipient selon la revendication 13 sous la forme d'une bombe de fumée actionnée automatiquement remplie avec le composé d'étiquetage qui comprend une teinture de fumée.
